# EUROPEAN PATENT APPLICATION

(11) **EP 4 209 572 A1**
(43) Date of publication of application: **12.07.2023**
(21) Application number: 20951999.0
(22) Date of filing: 04.09.2020
(51) Int. Cl.: C12M 1/00, G01N 21/64

(54) **FLOW CELL, FLOW CELL INTAKE AND OUTLET DEVICE AND SAMPLE ANALYSIS SYSTEM**

(71) Applicant: MGI Tech Co., Ltd., Shenzhen, Guangdong 518083 (CN); BGI Shenzhen, Shenzhen, Guangdong 518083 (CN)
(72) Inventor: CUI, Xingye, Shenzhen, Guangdong 518083 (CN); XING, Chutian, Shenzhen, Guangdong 518083 (CN); XIA, Yun, Shenzhen, Guangdong 518083 (CN); XI, Yang, Shenzhen, Guangdong 518083 (CN)
(74) Representative: Zaboliene, Reda
(86) International application number: PCT/CN2020/113624
(87) International publication number: WO 2022/047755

(57) **Abstract**

A flow cell (100) includes a first cover (11), a second cover (12) facing the first cover (11), and at least two spacers (13) provided side by side between the first cover (11) and the second cover (12). The first cover (11), the second cover (12), and two adjacent spacers (13) cooperatively form a flow path (14), surface of the first cover (11) near the second cover piece (12) forms a detection surface (17). A first opening (15) is provided at an end of the flow path (14), which can inject a first sample (a) into the flow path (14). The first sample (a) is adsorbed on the detection surface (17). A second opening (16) is provided at another end of the flow path (14), which can inject microdroplets (b) into the flow path (14). The microdroplets (b) include a second sample. The flow cell (100) achieves the detection of multi-dimensional size nucleic acid samples, can be reused, and also has low costs. A liquid inlet and outlet device applying flow cell (200) and a sample analysis system (300) are further provided.

## Description

### FIELD

The subject matter relates to a flow cell, a liquid inlet and outlet device applying flow cell, and a sample analysis system for biological sample analysis.

### BACKGROUND

Core components of gene sequencing technology and droplet digital PCR (polymerase chain reaction) technology are micro-flow cells. As an important carrier of a sample analysis system, the micro-flow cell is mainly used for the dispersion of nucleic acid samples and the preparation of microdroplets, providing a place for amplification and analysis of the nucleic acid samples.

The current sample analysis system has the following defects. The utilization rate of functional space in the micro-flow cell is not saturated. Especially, the functional division and utilization of the gap areas in the micro-flow cell is insufficient, which limits the application of the current sample analysis system in the research of multi-omics or Trans-Omics. In addition, the development cost of the current micro-flow cell is high, but it is a one-time consumable and cannot be reused, resulting in great waste.

### SUMMARY

To overcome at least a portion of the above shortcomings, a flow cell, a liquid inlet and outlet device applying flow cell, and a sample analysis system are needed.

According to a first aspect, a flow cell is provided, which includes a first cover, a second cover facing the first cover, and at least two spacers provided side by side between the first cover and the second cover. Both sides of each spacer are in contact with the first cover and the second cover. The first cover, the second cover, and adjacent two spacers cooperatively form a flow path. A detection surface is formed on a surface of the first cover near the second cover. A first opening is arranged at an end of the flow path. The first opening is configured to inject a first sample into the flow path, causing the first sample to be adsorbed on the detection surface. A second opening is arranged at another end of the flow path. The second opening is configured to inject microdroplets into the flow path, and the microdroplets include a second sample.

In an embodiment of the present application, a hydraulic radius of the first opening is smaller than a hydraulic radius of the second opening.

In an embodiment of the present application, the detection surface is further formed on a surface of the second cover near the first cover.

In an embodiment of the present application, the hydraulic radius of the first opening is 0.075 mm to 0.75 mm.

In an embodiment of the present application, the hydraulic radius of the second opening is 0.02 mm-0.2 mm.

In an embodiment of the present application, each of the at least two spacers is an adhesive layer.

In an embodiment of the present application, the first opening and the second opening are both on the first cover or the second cover.

According to a second aspect, a liquid inlet and outlet device applying flow cell is provided, which includes the above-mentioned flow cell, a first joint device, and a second joint device. The first joint device is connected to the first opening, and the second joint device is connected to the second opening.

In an embodiment of the present application, the second joint device includes a second joint portion, the second joint portion includes a first joint and a second joint, the second joint is connected to the second opening, the first joint is away from the second opening, a size of the first joint along a direction perpendicular to an extension direction of the flow path is smaller than a size of the second joint along the direction perpendicular to the extension direction of the flow path.

In an embodiment of the present application, the second joint device further includes a second interface block and a second sealing member, the second interface block is connected to the first joint, and the second sealing member is sleeved at the second joint.

In an embodiment of the present application, the second interface block includes a second liquid inlet channel, a second liquid outlet channel, a second control valve group, and a second common channel, and the second common channel is connected to the first joint.

In an embodiment of the present application, a hydraulic radius of each of the second liquid inlet channel and the second common channel is greater than a hydraulic radius of the second liquid outlet channel.

In an embodiment of the present application, the first joint device includes a first joint portion, a first interface block, and a first sealing member, an end of the first joint portion is connected to the first opening, and another end of the first joint portion is connected to the first interface block, the first sealing member is sleeved on the first joint portion.

In an embodiment of the present application, the first interface block includes a first liquid inlet channel, a first liquid outlet channel, a first control valve group, and a first common channel, and the first common channel is connected to the first joint portion.

According to a third aspect, a sample analysis system is provided, which includes the above-mentioned liquid inlet and outlet device applying flow cell, a first sample distribution device configured to inject the first sample into the flow cell through the first joint device, a second sample distribution device configured to form microdroplets from the second sample and inject the microdroplets into the flow cell through the second joint device, and an optical imaging unit configured to capture an image of the flow cell.

In an embodiment of the present application, the second sample distribution device includes a microdroplet generation device.

In an embodiment of the present application, the optical imaging unit includes a first lens assembly and a second lens assembly. The first lens assembly is configured to image the first sample. The second lens assembly is configured to image the microdroplets. A focal length of the first lens assembly is smaller than a focal length of the second lens assembly, and a field of view of the first lens assembly is smaller than a field of view of the second lens assembly.

In an embodiment of the present application, the focal length of the first lens assembly is 1 µm to 2 µm, the field of view of the first lens assembly is 1 mm to 2 mm; the focal length of the second lens assembly is 1 m to 2 mm, the field of view of the second lens assembly is 5 mm to 10 mm.

In an embodiment of the present application, a magnification of the first lens assembly is greater than a magnification of the second lens assembly.

In an embodiment of the present application, the optical imaging unit includes a third lens assembly and a compensation lens assembly.

In an embodiment of the present application, the sample analysis system further includes a cleaning unit connected to the flow cell.

By constructing the flow path and the detection surface in the flow cell provided by the embodiment, different samples can be located in arrays in the same system, thereby significantly improving the types of recognizable matters in the flow cell. The present application may be used for the detection and analysis of known and unknown pathogenic bacteria or infectious viruses, while taking into account the cost of both types of analysis. The sample analysis system combines the flow cell with a unique optical imaging unit to realize the analysis and detection of multi-dimensional nucleic acid samples. The detected content is more abundant, which can meet the detection of low demand and also the detection of high demand. The sequence information and dynamic concentration information of the nucleic acid samples can be obtained. The flow cell in the present application may be reused, which improves the utilization rate of the flow cell and reduces the cost of the flow cell.

### BRIEF DESCRIPTION OF THE DRAWINGS

Implementations of the present technology will now be described, by way of embodiment, with reference to the attached figures. Obviously, the drawings are only some embodiments of the present disclosure. For those of ordinary skill in the art, other drawings can be obtained based on these drawings without creative work.
FIG. 1 is a diagrammatic view of a flow cell provided according to an embodiment of the present application.
FIG. 2 is a diagrammatic view showing samples added to the flow cell according to the embodiment of the present application.
FIG. 3 is a diagrammatic view of a flow cell according to another embodiment of the present application.
FIG. 4 is a cross-sectional view of the flow cell along IV-IV of FIG. 3.
FIG. 5 is a cross-sectional view of a flow cell according to an embodiment of the present application.
FIG. 6 is a cross-sectional view of a flow cell according to another embodiment of the present application.
FIGS. 7A and 7B are diagrammatic views each showing a detection surface in the flow cell according to an embodiment of the present application.
FIGS. 8A and 8B are diagrammatic views each showing two detection surfaces in the flow cell according to an embodiment of the application.
FIG. 9 is a diagrammatic view of a liquid inlet and outlet device applying flow cell according to an embodiment of the present application.
FIG. 10 is a block diagram of a sample analysis system according to an embodiment of the present application.
FIG. 11A is a diagrammatic view showing an optical imaging unit capturing images of a first sample according to an embodiment of the present application.
FIG. 11B is a diagrammatic view showing the optical imaging unit capturing images of microdroplets according to an embodiment of the present application.
FIG. 12A is a diagrammatic view showing the optical imaging unit capturing images of the first sample according to another embodiment of the present application.
FIG. 12B is a diagrammatic view showing the optical imaging unit capturing images of the microdroplets according to another embodiment of the present application.
FIG. 13a is an image of microdroplets with uneven sizes in the flow cell according to the present disclosure.
FIG. 13b is an image of the microdroplets at edge of the flow cell of FIG. 13a.
FIG. 13c is an image when some of the microdroplets in the flow cell of FIG. 13 not included in the statistical data.
FIG. 13d is a normal distribution diagram of fluorescence intensities and radii of the microdroplets in the flow cell of FIG. 13a.
FIG. 14 is an image of microdroplets with even sizes in the flow cell according to the present application.
FIG. 15 is an image of the first sample in the flow cell according to the present application.

The following specific embodiments will further explain the application in combination with the above drawings.

Implementations of the application will now be described, by way of embodiments only, with reference to the drawings.

Symbol description of main components:
flow cell 100; second liquid inlet channel 2221;
first cover 11; second liquid outlet channel 2222;
second cover 12; second control valve group 2223;
spacer 13; second common channel 2224;
flow path 14; second inlet valve 2225;
detection surface 17; second outlet valve 2226;
active area 171; second sealing member 223;
separation area 172; sample analysis system 300
first opening 15; sample processing unit 31
second opening 16; optical imaging unit 32/39;
liquid inlet and outlet device applying flow cell 200; first lens assembly 321;
first joint device 21; second lens assembly 322;
first joint 211 portion; third lens assembly 323;
first interface block 212; compensation lens assembly 324;
first liquid inlet channel 2121; sample storage device 33;
first liquid outlet channel 2122; sample distribution device 34;
first control valve group 2123; first sample distribution device 341;
first common channel 2124; second sample distribution device 342;
first inlet valve 2125; upstream pump 35;
first outlet valve 2126; downstream pump 36;
first sealing member 213; microdroplet generating device 37;
second joint device 22; cleaning unit 38;
second joint portion 221; first sample a;
first joint 2211; microdroplet b;
second joint 2212; extension direction of flow path c;
second interface block 222

### DETAILED DESCRIPTION

Implementations of the disclosure will now be described, by way of embodiments only, with reference to the drawings. The described embodiments are only some embodiments of the present disclosure, rather than all the embodiments. The disclosure is illustrative only, and changes may be made in the detail within the principles of the present disclosure. It will, therefore, be appreciated that the embodiments may be modified within the scope of the claims.

It should be noted that when a component is referred to as being "fixed to" or "mounted on" another component, the component can be directly on another component or a middle component may exist therebetween. When a component is considered to be "arranged on" another component, the component can be directly on another component or a middle component may exist therebetween. The term "and/or" as used herein means any combinations of one or more related listed items.

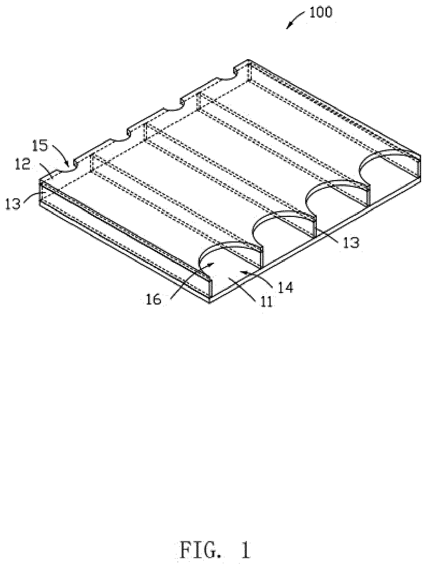

Referring to FIGS. 1 to 2, a flow cell 100 is provided according to an embodiment of the present application. The flow cell 100 is used to carry a nucleic acid sample. The flow cell 100 includes a first cover 11, a second cover 12, and at least two spacers 13. The first cover 11 and the second cover 12 are spaced from each other and face each other. Two adjacent spacers 13 are substantially parallel to each other and spaced between the first cover 11 and the second cover 12. Two sides of each spacer 13 are in contact with the first cover 11 and the second cover 12, so that a flow path 14 is formed among two surfaces of the first cover 11 and the second cover 12 and the two adjacent spacers 13. A plurality of flow paths 14 may be formed between the first cover 11 and the second cover 12, and an aspect ratio of each flow path 14 is greater than or equal to 1.

In this embodiment, the first cover 11 may be a silicon chip, inorganic glass, organic glass, transparent plastic, etc. A thickness of the first cover 11 is about 0.75 mm.

In this embodiment, the second cover 12 may be transparent inorganic glass, transparent organic glass, transparent plastic, etc. A thickness of the second cover 12 is 0.15 mm to 0.3 mm.

The spacers 13 are used to form the flow paths 14 between the first cover 11 and the second cover 12. Specifically, the flow path 14 of different sizes may be designed by changing the thickness of the spacer 13. In this embodiment, the spacer 13 is an adhesive layer, which may be a glue that can be solidified or a double-sided adhesive.

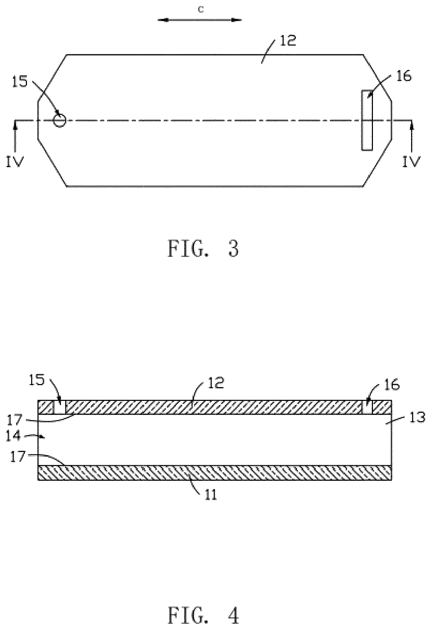

Referring to FIG, 4, in this embodiment, the first cover 11 has a detection surface 17 near the second cover 12. It can be understood that when there is only one detection surface 17, the detection surface 17 may also be the surface of the second cover 12 near the first cover 11. It can also be understood that, referring to FIG. 4, two detection surfaces 17 may be included. The two detection surfaces 17 are respectively two opposite surfaces of the first cover 11 and the second cover 12. At this time, an area between the two detection surfaces 17 forms the flow path 14.

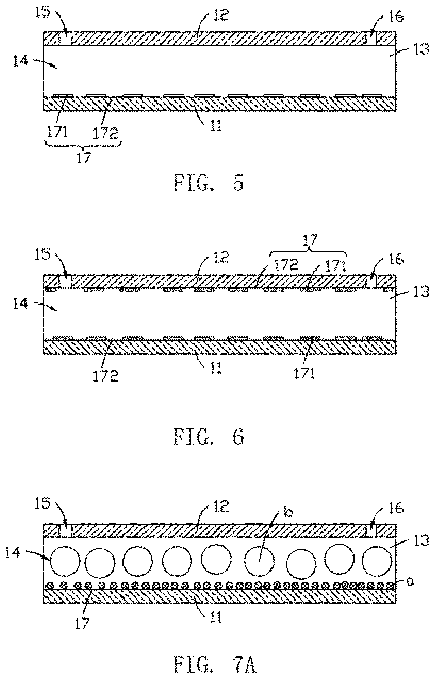

Specifically, referring to FIG. 5, in this embodiment, the surface of the first cover 11 close to the second cover 12 forms the detection surface 17 through a specific processing. It may be understood that referring to FIG. 6, the two opposite sides of the first cover 11 and the second cover 12 may be processed at the same time to form the two detection surfaces 17, and the flow path 14 is formed between the two detection surfaces 17.

In this embodiment, a first sample a is a nano-spherical nucleic acid molecule formed by winding, which is adsorbed on the detection surface 17. The detection surface 17 includes an active region 171 and a separation region 172 except the active region 171.

In this embodiment, the detection surface 17 includes a plurality of active regions 171 that are arranged in an array. The active region 171 includes chemical active groups such as amination, carboxylation, hydroxylation, which are used to combine with a target in the nucleic acid molecule or the molecule to be tested. The first sample a is a nanosphere formed by folding and winding of nucleic acid molecules, and a diameter is about 10 nm to 500 nm. The end of the nucleic acid nanosphere has exposed chemical groups, which are fixed on the active region 171 of the detection surface 17 through chemical bonds. Unknown sequence information of the nucleic acid molecules is determined by combining with fluorescence substances added into the flow path 14.

In this embodiment, the active region 171 may be circular, polygonal, or another shape. The active regions 171 of such shape are arranged on the detection surface 17. The active groups are distributed on the surface of the active region 171 of such shape, so that the nanospheres of the first sample a are located on the detection surface 17 in an array.

In a specific detection process, only the flow paths 14 may be used, or the flow paths 14 may be used in combination with the detection surfaces 17. Therefore, detection of a multi-dimensional nucleic acid sample array is realized.

Referring to FIGS. 3, 4, 7A and 8B, in this embodiment, a first opening 15 and a second opening 16 are formed at both ends of each flow path 14. The first opening 15 is used to inject the first sample a into the flow path 14. The first sample a may then be adsorbed on the detection surface 17. The second opening 16 is used to inject the microdroplets b into the flow path 14. The microdroplets b include a second sample.

In this embodiment, the first sample a is a nucleic acid molecule, and nucleic acid molecule after being amplified winds into a nanosphere structure to form the first sample a. Specifically, the diameter of the nanosphere structure of the first sample a is within a range of 10 nm and 500 nm. After the first sample a is injected into the flow path 14 through the first opening 15, the nanosphere will be adsorbed on the detection surface 17. Then, a detection reagent (such as a reagent used for sequencing, i.e., the above-mentioned fluorescence substance) is injected into the flow path 14 through the first opening 15 or the second opening 16. The detection reagent is fully reacted with the nanosphere on the detection surface 17 through suction. After the reaction is completed, the detection reagent is discharged from the flow path 14 through the first opening 15 or the second opening 16, and at this time, the first sample a is still adsorbed on the detection surface 17.

In this embodiment, microdroplet b is a micron-sized droplet (a diameter of the droplet is 10 µm to 50 µm), the droplet constitutes a small reaction system. After the microdroplet b is injected into the flow path 14 through the second opening 16, a reaction will perform on the microdroplet b in the flow path 14. After the reaction is completed, the microdroplet b does not need to be discharged from the flow path 14.

It may be understood that referring to FIGS. 7A to 8B, the diameter of the nanosphere of the first sample a is much smaller than the diameter of the microdroplet b.

Referring to FIG. 3, in this embodiment, a hydraulic radius of the first opening 15 is smaller than a hydraulic radius of the second opening 16. The hydraulic radius R is a proper term in hydraulics, which refers to a ratio of an orifice area of a water conveyance cross-section to a side length of a water conveyance pipeline in contact with the water (i.e., the wetted perimeter). The hydraulic radius R is related to the shape of the cross-section, and is often used to calculate the water conveyance capacity of a channel. The expression is as follows: R=A/χ, wherein A is an area of the water conveyance cross-section , χ is the wetted perimeter, namely the boundary length wetted by the flowing water on the cross-section. The first opening 15 and the second opening 16 may be circular, semi-circular, rectangular, fan-shaped, or other shapes. The hydraulic radius of a circular or semi-circular opening is as follows: R=A/χ= r²/d. The hydraulic radius of a rectangular opening is as follows: R=A/χ= W^{∗} H/2(w+H), wherein w and H are respectively the width and height of flow path 14 of the flow cell. The width of flow path 14 is defined as a dimension perpendicular to the extension direction c of the flow path. Taking the first opening 15 as a circular or semicircular opening as an example, if the radius r is between 0.3 mm to 3 mm and the hydraulic radius of the first opening 15 is 0.075 mm to 0.75 mm, the nanospheres of the first sample a enter the flow path 14 from the first opening 15 under pressure. Taking the second opening 16 as a rectangular opening as an example, if the width of flow path 14 is between 5 mm and 20 mm and the height is between 0.05 mm to 0.3 mm, the hydraulic radius of the second opening 16 is 0.02 mm to 0.2 mm. The microdroplet b enters the flow path 14 through the second opening 16 under pressure.

Referring to FIG, 4, in this embodiment, the first opening 15 and the second opening 16 are formed on the second cover 12.

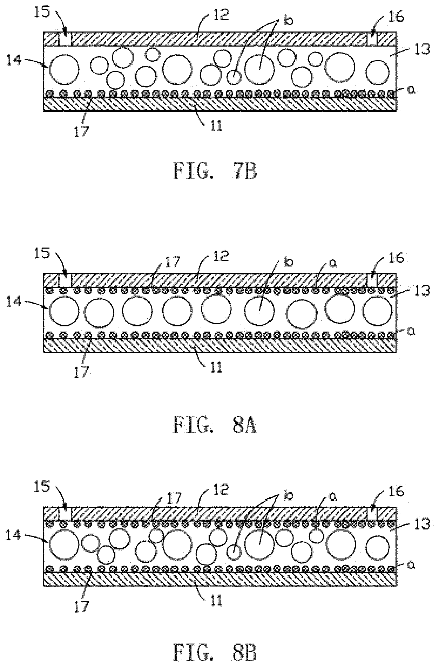

Referring to FIG. 7A, when there is only one detection surface 17, the first sample a is located on the detection surface 17 in an array, and the microdroplets b may be droplets having uniform size and located in the flow path 14 in an array. It is understandable that referring to FIG. 7B, the microdroplets b may also be droplets having uneven sizes in the flow path 14.

Referring to FIG. 8A, when there are two detection surfaces 17, the first sample a is disposed on each of the two detection surfaces 17 in an array, and the microdroplets b may be droplets having uniform size and located in the flow path 14 in an array. It may be understood that referring to FIG. 8B, the microdroplets b may also be droplets having uneven sizes in the flow path 14.

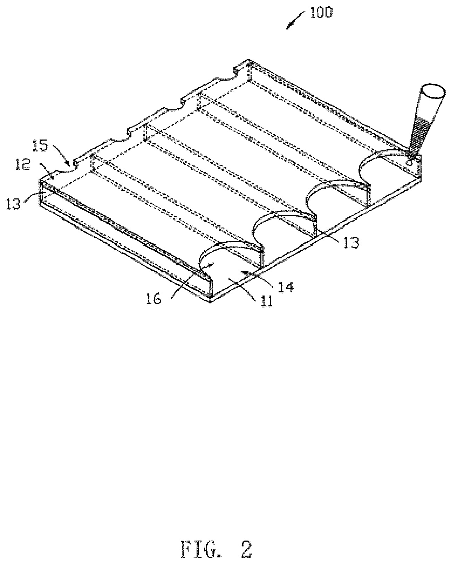

In this embodiment, a large number of micron-sized microdroplets b are distributed in an array in the flow path 14. The microdroplets b have two forms. One form of microdroplets b contains nucleic acid molecules, and the diameter of such microdroplet is about 50 µm. A large number of such microdroplets b are closely located in the flow path 14. The other form of microdroplets b is a magnetic microsphere with nucleic acid molecules labeled with fluorescence substances on its surface, and the diameter of the microsphere is about 20 µm. The microspheres are closely arranged with each other, and are located in an array in the flow path 14 when controlled by the magnetic control device outside the flow path 14. The microdroplet b may be a gel microbead, a mesoporous SiO₂ microsphere, or a water in oil microdroplet. The microdroplets b are added to the second opening 16 drop-by-drop through a wide-bore suction head, which then enter the flow path 14 under the pressure. By controlling the thickness of the spacer 13, most of the microdroplets b are distributed in a single layer. Referring to FIG. 1, the microdroplets b added in the flow path 14 are microdroplets with uneven size. The integrity of the droplets is ensured by driving the droplets by self-pressure. Referring to FIG. 2, the microdroplet b in the flow path 14 is incubated by temperature cycling to produce fluorescence. The theoretical dynamic detection value of the target nucleic acid molecules may be determined by calculating the ratio of the number of fluorescent droplets to the total number of droplets. Specifically, in this embodiment, the theoretical dynamic detection range of the target nucleic acid molecules can reach 10° copies/µL to 10⁶ copies/µL.

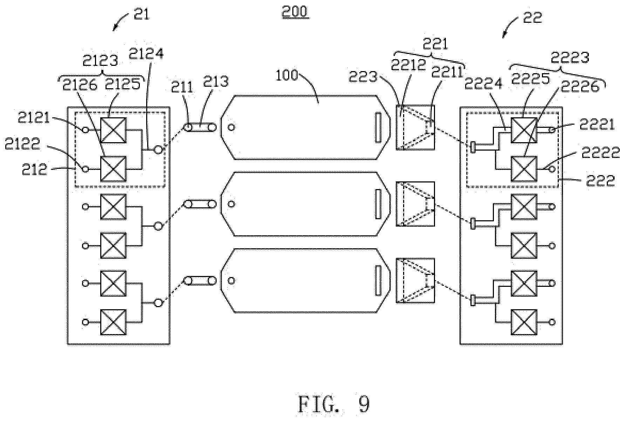

Referring to FIG. 9, an embodiment of the present application also provides a liquid inlet and outlet device applying flow cell 200, including the flow cell 100 as described above, and a first joint device 21 and a second joint device 22 respectively arranged at both ends of the flow path 14. The first joint device 21 is connected to the first opening 15, and the second joint device 22 is connected to the second opening 16.

The internal channel of each of the first joint device 21 and the second joint device 22 is typically one-to-two channels. The on-off of the liquid is controlled by valves. One of the two channels is used to control the liquid to enter the flow path 14, and the other of the two channels is used to control the liquid to exit the flow path 14. Specifically, both the first joint device 21 and the second joint device 22 may be composed of a two-position three-way solenoid valve and a manifold block, or composed of a single-way valve and a manifold block.

The first joint device 21 includes a first joint portion 211, a first interface block 212, and a first sealing member 213. One end of the first joint portion 211 is connected to the first opening 15, and the other end of the first joint portion 211 is connected to the first interface block 212. The first sealing member 213 is sleeved on the first joint portion 211.

Referring to FIGS. 7A to 8B, in this embodiment, the first interface block 212 includes a first liquid inlet channel 2121, a first liquid outlet channel 2122, a first control valve group 2123, and a first common channel 2124. The first common channel 2124 is connected to the first joint portion 211. The opening and closing of the first liquid inlet channel 2121 and the first liquid outlet channel 2122 are controlled by the first control valve group 2123, so that the first sample a can enter the flow path 14 from the first opening 15.

In this embodiment, the second joint device 22 includes a second joint portion 221, a second interface block 222, and a second sealing member 223. One end of the second joint portion 221 is connected to the second opening 16, and the other end of the second joint portion 221 is connected to the second interface block 222. The second sealing member 223 is sleeved on the second joint portion 221.

In this embodiment, the second joint portion 221 includes a first joint 2211 and a second joint 2212. The second joint 2212 is connected to the second opening 16. The first joint 2211 is located away from the second opening 16 and connected to the second interface block 222.

Referring to FIGS. 7A to 8B, in this embodiment, a size of the first joint 2211 along a direction perpendicular to the extension direction c of the flow path is smaller than s size of the second joint 2212 along the direction perpendicular to the extension direction c of the flow path. Specifically, both the first joint 2211 and the second joint 2212 are rectangular openings. The overall second joint portion 221 is funnel-shaped, and an included angle between two opposite sidewalls of the second joint portion 221 is less than 45°. The purpose of such setting is to enable the microdroplets b of micron sized to individually enter the flow path 14 in the flow path 14 and to be located in a single layer in the flow path 14, while preventing the microdroplets b from being fractured at the second joint portion 221.

In this embodiment, the second interface block 222 includes a second liquid inlet channel 2221, a second liquid outlet channel 2222, a second control valve group 2223, and a second common channel 2224. The second common channel 2224 is connected to the first joint 2211.

Referring to FIGS. 7A to 8B, in this embodiment, a hydraulic diameter of each of the second liquid inlet channel 2221 and the second common channel 2224 is greater than a hydraulic diameter of the second liquid outlet channel 2222. The hydraulic diameter of each of the second liquid inlet channel 2221 and the second common channel 2224 is larger than the diameter of the microdroplets b, so that the microdroplet b can smoothly enter the flow path 14 without being squeezed. When the reaction is completed, the microdroplets b can reduce the diameter by squeezing, so that they may be smoothly discharged from the second liquid outlet channel 2222 with a small hydraulic diameter. The second common channel 2224 with a larger hydraulic diameter can match the second joint portion 221 and the second sealing member 223.

The first control valve group 2123 and the second control valve group 2223 can realize one-way liquid inlet and one-way liquid outlet according to the function of one-to-two channels.

In this embodiment, the first control valve group 2123 includes a first inlet valve 2125 and a first outlet valve 2126. The first inlet valve 2125 is used to control the opening and closing of the first liquid inlet channel 2121, and the first outlet valve 2126 is used to control the opening and closing of the first liquid outlet channel 2122. The second control valve group 2223 includes a second inlet valve 2225 and a second outlet valve 2226. The second inlet valve 2225 is used to control the opening and closing of the second liquid inlet channel 2221, and the second outlet valve 2226 is used to control the opening and closing of the second liquid outlet channel 2222.

In this embodiment, the first sealing member 213 and the second sealing member 223 are elastomers with heat resistance, corrosion resistance, and biocompatibility. The materials include silicone rubber or fluororubber.

In this embodiment, the second sealing member 223 is designed as a funnel with a rectangular cross-section according to the structural shape of the second joint portion 221, and may be sleeved on the second joint portion 221.

In another embodiment, the second sealing member 223 itself forms the second joint portion 221. The second sealing member 223 is designed as a funnel with a rectangular cross-section, which is used for sealing purpose on the one hand and for realizing the function of the second joint portion 221 on the other hand.

Referring to FIGS. 7A to 9, a method for the first sample a to enter and exit the liquid inlet and outlet device applying flow cell 200 is as follows.

Step S11, the first inlet valve 2125 of the first joint device 21 and the second outlet valve 2226 of the second joint device 22 are opened. The first outlet valve 2126 of the first joint device 21 and the second inlet valve 2225 of the second joint device 22 are closed at the same time. The first sample a is pumped into the flow path 14 through the first joint device 21 and then adsorbed on the detection surface 17.

Similarly, when sequencing the first sample a, a same method is used to add the detection reagent for sequencing to the flow path 14 through the first opening 15.

Step S12, the first inlet valve 2125 of the first joint device 21 and the second outlet valve 2226 of the second joint device 22 are opened. The first outlet valve 2126 of the first joint device 21 and the second inlet valve 2225 of the second joint device 22 are closed at the same time. The combination of the detection reagent and the first sample a is realized by repeatedly pumping the detection reagent under pressure, and then the combination of nucleic acid molecules and fluorescence substances (i.e., detection reagents) is realized.

Step S13, after the reaction is completed, if it is necessary to discharge the detection reagent, the first outlet valve 2126 of the first joint device 21 and the second inlet valve 2225 of the second joint device 22 are opened, and the first inlet valve 2125 of the first joint device 21 and the second outlet valve 2226 of the second joint device 22 are closed at the same time. The detection reagent after the reaction is discharged from the first outlet valve 2126 of the first joint device 21 to the flow path 14 under pressure. It may be understood that the first inlet valve 2125 of the first joint device 21 and the second outlet valve 2226 of the second joint device 22 may also be opened, and the first outlet valve 2126 of the first joint device 21 and the second inlet valve 2225 of the second joint device 22 may also be kept closed, so that the detection reagent may be discharged from the second outlet valve 2226.

Referring to FIGS. 7A to 9, a method for the microdroplet b to enter and exit the liquid inlet and outlet device applying flow cell 200 is as follows.

The second inlet valve 2225 of the second joint device 22 and the first outlet valve 2126 of the first joint device 21 are opened, and the first inlet valve 2125 of the first joint device 21 and the second outlet valve 2226 of the second joint device 22 are kept closed at the same time. The microdroplets b are pumped into the flow path 14 in the flow path 14 through the second joint device 22, and the amplification reaction and combination with the fluorescence substances are carried out in the flow path 14. The microdroplets b do not need to be discharged from the flow path 14 after the reaction is completed.

In a practical use, the above sample pumping process includes multiple stages of pumping.

In another practical use, the above droplet pumping process includes multiple stages of pumping forward and pumping backward.

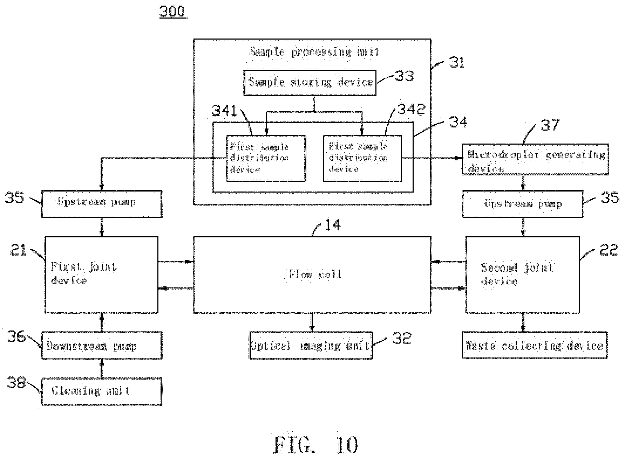

Referring to FIGS. 10 and 9, an embodiment of the present application also provides a sample analysis system 300, which includes a sample processing unit 31, the liquid inlet and outlet device applying flow cell 200 mentioned above, and an optical imaging unit 32. The sample processing unit 31 is connected to the liquid inlet and outlet device applying flow cell 200 for adding the samples into the liquid inlet and outlet device applying flow cell 200. The liquid inlet and outlet device applying flow cell 200 is located within an imaging range of the optical imaging unit 32, thereby allowing the optical imaging unit 32 to collect images of the flow path 14 in the liquid inlet and outlet device applying flow cell 200.

The sample processing unit 31 is used to preprocess the samples. The sample processing unit 31 mainly includes a sample storage device 33 and a sample distribution device 34. The sample storage device 33 is used for independent storage of multiple samples and reagents. The sample distribution device 34 is used for respectively adding multiple samples and reagents into flow path 14.

Referring to FIGS. 7A to 8B, in this embodiment, the samples to be tested are nucleic acid molecules that mainly include two kinds. One kind is the first sample a, and the other kind is the second sample used to form microdroplets b. The multiple reagents may be mineral oil, dNTP, fluorescence-labeled molecular probe, deoxyribonucleic acid oligomerization, enzyme, phosphate buffer, and biological enzyme. The above reagents may also be added into the microdroplets b according to actual needs. The first sample a and the second sample are separately stored in small tubes each sealed by a sealing film. The small tubes are located on the sample storage device 33. The sample storage device 33 includes multiple independent slots. Other reagents are separately packaged in such independent slots. The storage temperature of the sample storage device 33 is relatively low, about 4°C.

Referring to FIG. 10, in this embodiment, the sample distribution device 34 includes a first sample distribution device 341 and a second sample distribution device 342. The first sample distribution device 341 is connected to the first joint device 21, and is used to inject the first sample a and corresponding detection reagents into the flow path 14 through the first joint device 21 and the first opening 15. After the first sample a enters the flow path 14, the nanospheres of the first sample a are adsorbed on the detection surface 17. During the reaction, the required detection reagent stored in the sample storage device 33 is injected into the first opening 15 and the flow path 14 through the first sample distribution device 341 each time. The second sample distribution device 342 is connected to the second joint device 22, and is used to mix the second sample with the corresponding reagents and then generate the microdroplets b from the above mixture. The microdroplets b are then injected into the flow path 14 through the second joint device 22 and the second opening 16.

Referring to FIG. 10, in this embodiment, the second sample distribution device 342 further includes a microdroplet generation device 37, which is used to generate the microdroplets b from the mixture of the second sample and the corresponding reagents. The second sample distribution device 342 may be a microfluidic droplet generator or a concussion emulsifier.

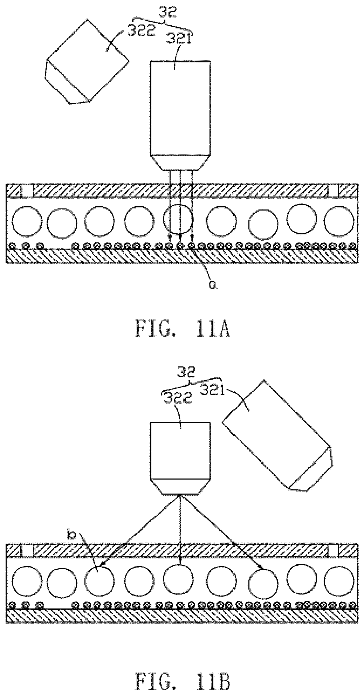

Referring to FIGS. 11A to 12B, the optical imaging unit 32 has two modes. One mode is to use two lens assemblies to respectively image the nucleic acid molecular array on the detection surface 17 and the droplet array in the flow path 14. The other mode is to use only one lens assembly, and by adding a lens with adjustable imaging focal plane and field of view on the lens assembly, the purpose of imaging the nucleic acid molecular array on the detection surface 17 and the droplet array in the flow path 14 is realized.

Referring to FIGS. 11A and 11B, in the first mode, the optical imaging unit 32 includes a first lens assembly 321 and a second lens assembly 322. The first lens assembly 321 is used to image the first sample a, and the second lens assembly 322 is used to image the microdroplets b.

In this embodiment, a focal length of the first lens assembly 321 is smaller than that of the second lens assembly 322. A field of view of the first lens assembly 321 is smaller than that of the second lens assembly 322. Specifically, the focal length of the first lens assembly 321 is 1 µm to 2 µm, and the field of view of the first lens assembly 321 is about 1 mm to 2 mm. The focal length of the second lens assembly 322 is about 1 mm to 2 mm, and the field of view of the second lens assembly 322 is about 5 mm to 10 mm. A magnification of the first lens assembly 321 is greater than that of the second lens assembly 322, so the first lens assembly 321 may be used to clearly image the first sample a of the nanosphere structure.

Accordingly, the image data collected by the first lens assembly 321 and the second lens assembly 322 is respectively stored in planned storage paths. The image data will be used for analysis according to specific applications, including early screening or diagnosis of tumors or cancer, and detection and analysis of infectious disease pathogens, etc.

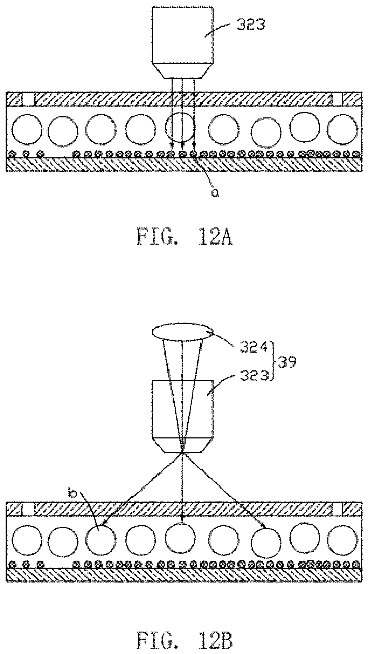

Referring to FIGS. 12A and 12B, in another mode, the optical imaging unit 39 includes a third lens assembly 323. The third lens assembly 323 includes a lens having a fixed focal length for imaging the nanometer-sized first sample a. When it is necessary to image the micron-sized microdroplets b, a compensation lens assembly 324 is added on the third lens assembly 323, which is used to adjust the imaging focal plane and field of view.

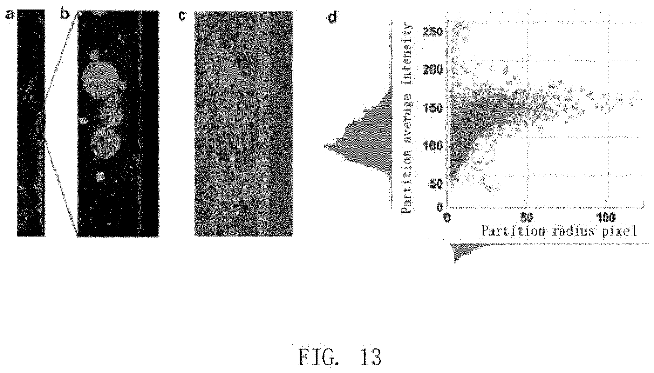

Referring to FIGS. 13a to 13d, an image of microdroplets (microdroplet b) with uneven sizes in the flow path 14 and a statistical analysis image are shown. The second lens assembly 322 is used to collect the image of the optical imaging range in the flow path 14. The detection conditions include nucleic acid branch labeled with fluorescence dye Cy5, the concentration of Cy5 is about 7 mM, and the nucleic acid after dilution of 500 times is used to prepared water-in-oil microdroplets by a vibration emulsification method; the excitation source is a green laser with a wavelength of 532 nm and a power of 2 W to 5 W, and a fixed focal plane of 1.5 µm; MATLAB is used to perform statistical analysis on the diameter and number of the microdroplets.

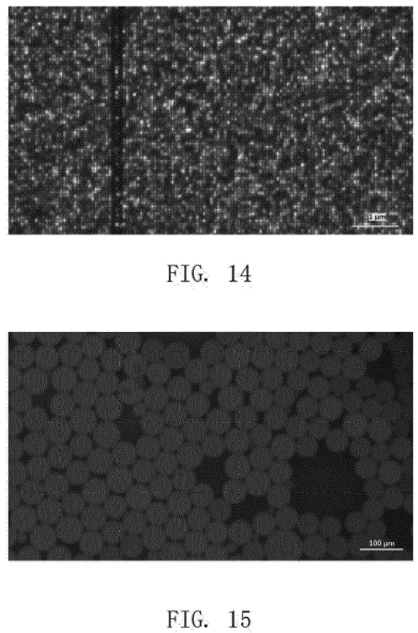

The results are shown in FIG. 13a, which is a top view of the flow cell, and is also a thumbnail spliced by 60 consecutive micro-fluorescence images with field of views connected to each other. It shows that there are microdroplets (microdroplets b) with uneven sizes distributed in the flow path 14. FIG. 14b shows that there are dense small droplets (the first sample a) on the detection surface 17 at the edge of the flow path 14. Some large droplets in the flow path 14 in FIG. 14c are not included in the statistical data. Compared with FIG. 13b, the image splicing may affects the roundness difference of the droplets, thus affecting the statistical accuracy. FIG. 13d shows statistical results of fluorescence intensities and radii of the microdroplets b in the flow path 14, in which the fluorescence intensities and the radii are basically normal distributed.

Referring to FIG. 14, which is an image of microdroplets (microdroplets b) with uniform size in the flow path 14. The second lens assembly 322 is used to collect the image of the optical imaging range in the flow path 14, and it may be seen that the microdroplets b in the flow path 14 are in an array.

Referring to FIG. 15, which is an image formed by optical signals from the first sample a (including nucleic acid library for sequencing or DNA nanospheres after specific winding) collected by the first lens assembly 321. The image is a fluorescence image with clear outlines including the first sample a (DNA nanospheres with a diameter about 200 nm) located in an array.

In this embodiment, the sample analysis system further includes a cleaning unit 38, which is connected to flow path 14 to clean the pipeline and the flow paths 14.

Referring to FIG. 10 and 9, in practical use, the flow cell 100 is installed on an installation platform (not shown). The first opening 15 of the flow cell 100 is in sealing connection to the first joint device 21 through the first sealing member 213. The second opening 16 of the flow cell 100 is in sealing connection to the second joint device 22 through the second sealing member 223. The first joint device 21 and the second joint device 22 are connected to the sample distribution device 34 through pipelines. The samples are pumped through an upstream pump 35 (such as a syringe pump). The first joint device 21 and the second joint device 22 are connected to the cleaning unit 38 through pipelines, and a downstream pump 36 (such as the syringe pump) is used to injecting a cleaning reagent or discharging waste liquids. The sample distribution device 34, the upstream pump 35, the first joint device 21, the second joint device 22, and the downstream pump 36 may all be connected to a control device (not shown), and are activated or turned on by the control device.

Referring to FIGS. 7A to 10, a sample analysis process executed by the above sample analysis system 300 includes the following steps.

Step 1, two samples are prepared, which include a first sample a and a second sample.

In this embodiment, the first sample a includes nanospheres with nanometer-sized characteristics. The second sample is used to generate microdroplets b with micron-sized characteristics.

In this embodiment, the first sample a, the second sample, and other required reagents are stored in the sample storage device 33. The first sample a and the second sample are separately stored in the small tubes sealed by the sealing films, the small tubes are located in the sample storage device 33. The sample storage device 33 further includes multiple independent slots, and other reagents are separately packaged in such independent slots. The storage temperature of the sample storage device 33 is relatively low, about 4°C. The multiple reagents may be mineral oil, dNTP, fluorescence-labeled molecular probe, deoxyribonucleic acid oligomer, enzyme, phosphate buffer, and biological enzyme.

Step 2, the first sample a is injected into the flow path 14.

The sealing film of the sealed tube containing the first sample a is penetrated, and the first sample a is extracted from the sealed tube in the sample storage device 33 by pressure. The first sample a is then pumped into the first joint device 21 and the flow path 14 through the first sample distribution device 341. The first sample a is adsorbed on the detection surface 17 and located in an array.

In this embodiment, the first sample a is pumped into the first joint device 21 through the suction of the upstream pump 35.

Step 3, after standing for a period of time (for example, 30 minutes), the nucleic acid nanospheres (i.e., the first sample a) are fully adsorbed on the detection surface 17 under the interaction of the active groups, thereby forming a relatively regular array of nano-nucleic acid molecules.

Step 4: the first sample a is detected and analyzed. Specifically, the nucleic acid molecules are sequenced in this embodiment. The sequencing method is as follows.

First, the first fluorescence substance is pumped into the flow path 14 under pressure. The first fluorescence substance is combined with the first sample a through repeated pumping. After the reaction is completed, the residual first fluorescence substance is discharged from the flow path 14 through the second opening 16. In the same way, other fluorescence substances are combined with the first sample a. When one fluorescence substance is introduced, the first sample a in the nanosphere array that combined with such fluorescence substance will emit a fluorescence signal.

Then, the fluorescence signal generated during each cycling reaction is imaged and analyzed to obtain sequence information of the first sample a.

Specifically, the fluorescence substances loaded into the flow path 14 are repeatedly pumped under pressure to realize the combination of the nucleic acid molecules in the array and the fluorescence substances. The fluorescence signal generated during each cycling reaction is imaged and analyzed, and the sequence of a segment of bases in the first sample a may be obtained until the sequence analysis of a required length of base is completed. Through such method, the sequence information of unknown nucleic acid molecules may be detected, to achieve the purpose of sequencing.

In this embodiment, the imaging analysis is realized through the optical imaging unit 32. Specifically, the first lens assembly 321 with high magnification is used to realize the imaging analysis of nucleic acid nanospheres. The focal length and field of view of the combination of objective lens and optical lens are small. The focal length is about 1 µm to 2 µm, and the field of view is about 1 mm to 2 mm. FIG. 15 is a fluorescence image of DNA nanospheres (with a diameter of about 200 nm).

Step 5, microdroplets b are prepared from the second sample and inject into the flow path 14.

The sealing film of the sealed tube containing the second sample is penetrated, and the second sample is extracted from the sealed tube in the sample storage device 33 under pressure. The second sample is then mixed with other reagents in the sample storage device 33 to form a mixture. The mixture containing the second sample is located in the second sample distribution device 342. The mixture containing the second sample is injected into the microdroplet generation device 37 through the second sample distribution device 342 under pressure. The microdroplets b are generated from the second sample generates in the microdroplet generation device 37 (such as a microfluidic droplet generator or a oscillating emulsifier). Then, the microdroplets b are injected into the flow path 14 through the second joint device 22. After standing for a period of time, a large number of microdroplets are stably suspended in the flow path 14 to form an array of microdroplets.

In this embodiment, the second sample and other reagents are evenly mixed through the suction of the upstream pump 35. The mixture is pumped into the microdroplet generation device 37 through the upstream pump 35, and the microdroplets b are injected into the flow path 14 through the second joint device 22 through the upstream pump 35.

In this embodiment, the microdroplet b is a nucleic acid molecular coating and copolymer (such as nucleic acid microdroplet) with micron-sized characteristics. The microdroplet b contains raw materials required for nucleic acid molecular amplification.

Step 6, the second sample is analyzed. The droplet array will undergo multiple cycles of amplification reactions in the flow path 14. The products obtained after each cycle of amplification reaction are used to combine with corresponding fluorescence substances to generate fluorescence signals. The fluorescence signal generated by each cycle of amplification reaction is imaged and analyzed to obtain the sequence information of the second sample or the amount of a certain base in the second sample with a known sequence.

Specifically, after the microdroplets (microdroplets b) are stably suspended and for a moment, the flow path 14 is incubated when maintaining a specific temperature or a specific temperature circulating gradient, so that the nucleic acid molecules in the microdroplets are combined with the fluorescence substances. After a specific reaction time, the fluorescence signal of the microdroplets is analyzed through the image of the flow cell captured by the second lens assembly 322. Thus, the amount of a certain base in the nucleic acid molecules of the second sample may be obtained. Through such method, qualitative and quantitative analysis of nucleic acid molecules with known sequences may be realized.

In the cleaning step, the cleaning unit 38 is started, and a specific cleaning reagent (such as Tween-20 or sodium hydroxide solution) and water are extracted from the cleaning unit 38 to clean the pipelines of the system. The cleaned system may then be used for a next detection and analysis. The cleaning step can be during the detection of the first sample a. The pipelines of the system and the flow paths 14 need to be cleaned during the adding of two different fluorescence substances. In addition, after the detection of the first sample a, if the detection of microdroplets b is required, the pipelines of the system and the flow paths 14 need to be cleaned.

The sequence analysis of nano-nucleic acid molecular array (the first sample a) is realized in steps 1 to 4. The detection and analysis of microdroplet array (microdroplets b) wrapped with nucleic acid molecules are realized in steps 5 and 6. The two analysis stages are independent to each other. A complete system working logic should include steps 1 to 4, or include steps 5 and 6, or include steps 1 to 6. The cleaning step shall be carried out according to actual situation as described above.

The sample analysis system 300 provided by the embodiment of the present application combines gene sequencing technology and droplet PCR technology, which realizes the analysis of a large number of diseases caused by known or unknown pathogens, and has high cost performance and high detection efficiency. It also realizes the integration of multiple functions, and the operation process is simple. It does not need to consume a large number of nucleic acid samples, thereby reducing the sampling requirements and conducive to the comprehensive analysis of rare nucleic acid samples. The demand for physical resources is relatively small. The demand for infrastructure such as power supply, desk, computing, and storage resources as well as for supporting equipment or software of equipment management is relatively low.

By constructing the flow path and the detection surface in the flow cell, different samples can be located in arrays in the same system, thereby significantly improving the types of recognizable matters in the flow cell. Taking the detection and analysis of pathogenic bacteria or infectious viruses as an example, the present application may be used for the detection and analysis of known and unknown pathogenic bacteria or infectious viruses, while taking into account the cost of both types of analysis.

The sample analysis system combines the flow cell with a unique optical imaging unit to realize the analysis and detection of multi-dimensional nucleic acid samples. The detected content is more abundant, which can meet the detection of low demand and also the detection of high demand. At the same time, the analysis performance is improved. Taking droplet PCR as an example, the present application can significantly increase the number of droplets that are analyzed and thus improve the dynamic detection range of the concentration of target.

The flow cell in the present application may be reused, which improves the utilization rate of the flow cell and reduces the cost of the flow cell.

Even though information and advantages of the embodiments have been set forth in the foregoing description, together with details of the structures and functions of the embodiments, the disclosure is illustrative only. Changes may be made in detail, especially in matters of shape, size, and arrangement of parts within the principles of the present exemplary embodiments, to the full extent indicated by the plain meaning of the terms in which the appended claims are expressed.

## Claims

1. A flow cell, **characterized in that**, comprises:
a first cover;
a second cover facing the first cover;
at least two spacers provided side by side between the first cover and the second cover, wherein both sides of each of the at least two spacers are in contact with the first cover and the second cover; the first cover, the second cover, and adjacent two of the at least two spacers cooperatively form a flow path; a detection surface is formed on a surface of the first cover near the second cover;
a first opening arranged at an end of the flow path, wherein the first opening is configured to inject a first sample into the flow path, causing the first sample to be adsorbed on the detection surface; and
a second opening arranged at another end of the flow path, wherein the second opening is configured to inject microdroplets into the flow path, and the microdroplets comprise a second sample.

2. The flow cell according to claim 1, **characterized in that**, a hydraulic radius of the first opening is smaller than a hydraulic radius of the second opening.

3. The flow cell according to claim 1, **characterized in that**, the detection surface is further formed on a surface of the second cover near the first cover.

4. The flow cell according to claim 2, **characterized in that**, the hydraulic radius of the first opening is 0.075 mm to 0.75 mm.

5. The flow cell according to claim 2, **characterized in that**, the hydraulic radius of the second opening is 0.02 mm-0.2 mm.

6. The flow cell according to claim 1, **characterized in that**, each of the at least two spacers is an adhesive layer.

7. The flow cell according to claim 1, **characterized in that**, the first opening and the second opening are both on the first cover or the second cover.

8. A liquid inlet and outlet device applying flow cell, **characterized in that**, comprises:
a flow cell according to any one of claims 1 to 7;
a first joint device; and
a second joint device, wherein the first joint device is connected to the first opening, and the second joint device is connected to the second opening.

9. The liquid inlet and outlet device applying flow cell according to claim 8, **characterized in that**, the second joint device comprises a second joint portion, the second joint portion comprises a first joint and a second joint, the second joint is connected to the second opening, the first joint is away from the second opening, a size of the first joint along a direction perpendicular to an extension direction of the flow path is smaller than a size of the second joint along the direction perpendicular to the extension direction of the flow path.

10. The liquid inlet and outlet device applying flow cell according to claim 9, **characterized in that**, the second joint device further comprises a second interface block and a second sealing member, the second interface block is connected to the first joint, and the second sealing member is sleeved at the second joint.

11. The liquid inlet and outlet device applying flow cell according to claim 10, **characterized in that**, the second interface block comprises a second liquid inlet channel, a second liquid outlet channel, a second control valve group, and a second common channel, and the second common channel is connected to the first joint.

12. The liquid inlet and outlet device applying flow cell according to claim 11, **characterized in that**, a hydraulic radius of each of the second liquid inlet channel and the second common channel is greater than a hydraulic radius of the second liquid outlet channel.

13. The liquid inlet and outlet device applying flow cell according to claim 8, **characterized in that**, the first joint device comprises a first joint portion, a first interface block, and a first sealing member, an end of the first joint portion is connected to the first opening, and another end of the first joint portion is connected to the first interface block, the first sealing member is sleeved on the first joint portion.

14. The liquid inlet and outlet device applying flow cell according to claim 13, **characterized in that**, the first interface block comprises a first liquid inlet channel, a first liquid outlet channel, a first control valve group, and a first common channel, and the first common channel is connected to the first joint portion.

15. A sample analysis system, **characterized in that**, comprises:
a liquid inlet and outlet device applying flow cell according to any one of claims 8 to 14;
a first sample distribution device configured to inject the first sample into the flow cell through the first joint device;
a second sample distribution device configured to form microdroplets from the second sample, and inject the microdroplets into the flow cell through the second joint device; and
an optical imaging unit configured to capture an image of the flow cell.

16. The sample analysis system according to claim 15, **characterized in that**, the second sample distribution device comprises a microdroplet generation device.

17. The sample analysis system according to claim 15, **characterized in that**, the optical imaging unit comprises a first lens assembly and a second lens assembly;
the first lens assembly is configured to image the first sample;
the second lens assembly is configured to image the microdroplets;
a focal length of the first lens assembly is smaller than a focal length of the second lens assembly, and a field of view of the first lens assembly is smaller than a field of view of the second lens assembly.

18. The sample analysis system according to claim 17, **characterized in that**, the focal length of the first lens assembly is 1 µm to 2 µm, the field of view of the first lens assembly is 1 mm to 2 mm; the focal length of the second lens assembly is 1 m to 2 mm, the field of view of the second lens assembly is 5 mm to 10 mm.

19. The sample analysis system according to claim 17, **characterized in that**, a magnification of the first lens assembly is greater than a magnification of the second lens assembly.

20. The sample analysis system according to claim 15, **characterized in that**, the optical imaging unit comprises a third lens assembly and a compensation lens assembly.

21. The sample analysis system according to claim 15, **characterized in that**, the sample analysis system further comprises a cleaning unit connected to the flow cell.
